# EUROPEAN PATENT SPECIFICATION

(11) **EP 4 595 331 B1**
(45) Date of publication and mention of the grant of the patent: **18.11.2026**
(21) Application number: 23790076.6
(22) Date of filing: 29.09.2023
(51) Int. Cl.: H04L 5/00, H04W 92/18

(54) **ALLOCATING RESOURCES BASED ON FIELD INFORMATION**
ZUWEISUNG VON RESSOURCEN AUF BASIS VON FELDINFORMATIONEN
ATTRIBUTION DE RESSOURCES SUR LA BASE D'INFORMATIONS DE CHAMP

(30) Priority: 29.09.2022 US 202263411250 P
(43) Date of publication of application: 06.08.2025
(60) Divisional application: 26192869.1 / 4 801 187
(73) Proprietor: Lenovo (Singapore) Pte. Ltd., Singapore 556741 (SG)
(72) Inventor: LÖHR, Joachim, 65203 Wiesbaden (DE); THOMAS, Robin Rajan, 61231 Bad Nauheim (DE); GANESAN, Karthikeyan, 61476 Kronberg im Taunus (DE); CHOI, Hyung-Nam, 85521 Ottobrunn (DE); BASU MALLICK, Prateek, 63303 Dreieich (DE); GOLITSCHEK EDLER VON ELBWART, Alexander, 64285 Darmstadt (DE)
(74) Representative: Openshaw & Co.
(86) International application number: PCT/IB2023/059801
(87) International publication number: WO 2024/069584

(56) References cited:
- WO-A1-2022/184240
- INTERDIGITAL ET AL: "Potential solutions for SL positioning", vol. RAN WG1, no. Toulouse, France; 20220822 - 20220826, 12 August 2022 (2022-08-12), XP052275024, Retrieved from the Internet <URL:https://ftp.3gpp.org/tsg_ran/WG1_RL1/TSGR1_110/Docs/R1-2207087.zip R1-2207087_110e_POS_AI9513_SLSolns.docx> [retrieved on 20220812]

## Description

### FIELD

The subject matter disclosed herein relates generally to wireless communications and more particularly relates to allocating resources based on field information.

### BACKGROUND

In certain wireless communications systems, sidelink ("SL") resources and positioning may be used. In such systems, resource and positioning allocation may be inefficient.

R1-2207087 is a 3GPP discussion document titled "Potential solutions for SL positioning" submitted by InterDigital Inc. at TSG RAN WG1 #1 10-e in Toulouse, France, on 22 August 2022 and proposes terminology for Reference anchor UE and Sidelink positioning group, whereby in an in-coverage SL positioning, a target UE and anchor UE(s) of a SL position group are within network coverage.

WO 2022/184240 A1 describes a user device for positioning based on sidelink, wherein the user device is configured to: obtain a sidelink, SL, positioning resource information, wherein the sidelink positioning resource information indicates a resource characteristic of a sidelink positioning reference signal, SL-PRS, a positioning assistance data, AD, or location information, LI; and perform sidelink positioning based on the sidelink positioning resource information.

### BRIEF SUMMARY

The invention is defined by the appended claims.

Methods for allocating resources based on field information are disclosed. Apparatuses and systems also perform the functions of the methods. One embodiment of a method includes receiving, at a user equipment ("UE"), downlink control information ("DCI") that allocates SL resources. The DCI includes a first field indicating whether the SL resources are allocated for a SL positioning reference signal ("PRS") ("SL-PRS") transmission. In some embodiments, the method includes, in response to the first field indicating that the SL resources are allocated for the SL-PRS transmission, performing the SL-PRS transmission based at least partly on the DCI. In certain embodiments, the method includes, in response to the first field indicating that the SL resources are not allocated for the SL-PRS transmission, initiating a physical SL shared channel ("PSSCH") transmission.

One apparatus for allocating resources based on field information includes a processor. In some embodiments, the apparatus includes a memory coupled to the processor, the processor configured to cause the apparatus to: receive DCI that allocates SL resources, wherein the DCI includes a first field indicating whether the SL resources are allocated for a SL-PRS transmission; in response to the first field indicating that the SL resources are allocated for the SL-PRS transmission, perform the SL-PRS transmission based at least partly on the DCI; and, in response to the first field indicating that the SL resources are not allocated for the SL-PRS transmission, initiate PSSCH transmission.

Another embodiment of a method for allocating resources based on field information includes transmitting, at a network device, DCI that allocates SL resources. The DCI includes a first field indicating whether the SL resources are allocated for a SL-PRS transmission. In some embodiments, the method includes, in response to the first field indicating that the SL resources are allocated for the SL-PRS transmission, receiving the SL-PRS transmission based at least partly on the DCI. In certain embodiments, the method includes, in response to the first field indicating that the SL resources are not allocated for the SL-PRS transmission, receiving a PSSCH transmission.

Another apparatus for allocating resources based on field information includes a processor. In some embodiments, the apparatus includes a memory coupled to the processor, the processor configured to cause the apparatus to: transmit DCI that allocates SL resources, wherein the DCI includes a first field indicating whether the SL resources are allocated for a SL-PRS transmission; in response to the first field indicating that the SL resources are allocated for the SL-PRS transmission, receive the SL-PRS transmission based at least partly on the DCI; and, in response to the first field indicating that the SL resources are not allocated for the SL-PRS transmission, receive a PSSCH transmission.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for allocating resources based on field information;
Figure 2 is a schematic block diagram illustrating one embodiment of an apparatus that may be used for allocating resources based on field information;
Figure 3 is a schematic block diagram illustrating one embodiment of an apparatus that may be used for allocating resources based on field information;
Figure 4A is a diagram illustrating one embodiment of a relative positioning, variable coordinate system;
Figure 4B is a diagram illustrating one embodiment of a relative positioning, variable and moving coordinate system;
Figure 4C is a diagram illustrating one embodiment of an absolute positioning, fixed coordinate system;
Figure 5 is a diagram illustrating one embodiment of a beam-based positioning framework;
Figure 6 is a diagram illustrating one embodiment of a vehicular ad hoc network ("VANET") architecture;
Figure 7 is a flow chart diagram illustrating one embodiment of a method for allocating resources based on field information; and
Figure 8 is a flow chart diagram illustrating another embodiment of a method for allocating resources based on field information.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

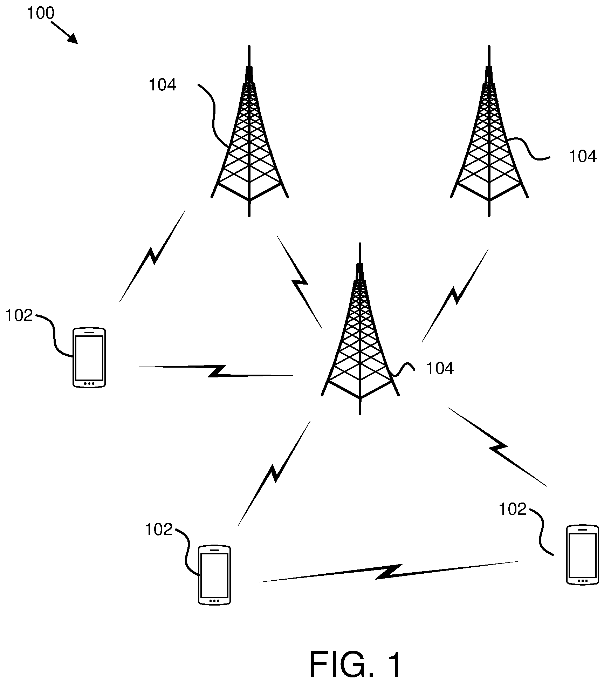

Figure 1 depicts an embodiment of a wireless communication system 100 for allocating resources based on field information. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an orthogonal frequency division multiplexing ("OFDM") modulation scheme on the downlink ("DL") and the remote units 102 transmit on the uplink ("UL") using a single-carrier frequency division multiple access ("SC-FDMA") scheme or an OFDM scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfox, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may receive DCI that allocates SL resources. The DCI includes a first field indicating whether the SL resources are allocated for a SL-PRS transmission. In some embodiments, the remote unit 102 may, in response to the first field indicating that the SL resources are allocated for the SL-PRS transmission, perform the SL-PRS transmission based at least partly on the DCI. In certain embodiments, the remote unit 102 may, in response to the first field indicate that the SL resources are not allocated for the SL-PRS transmission, initiating a PSSCH transmission. Accordingly, the remote unit 102 may be used for allocating resources based on field information.

In certain embodiments, a network unit 104 may transmit DCI that allocates SL resources. The DCI includes a first field indicating whether the SL resources are allocated for a SL-PRS transmission. In some embodiments, the network unit 104 may, in response to the first field indicate that the SL resources are allocated for the SL-PRS transmission, receiving the SL-PRS transmission based at least partly on the DCI. In certain embodiments, the network unit 104 may, in response to the first field indicate that the SL resources are not allocated for the SL-PRS transmission, receiving a PSSCH transmission. Accordingly, the network unit 104 may be used for allocating resources based on field information.

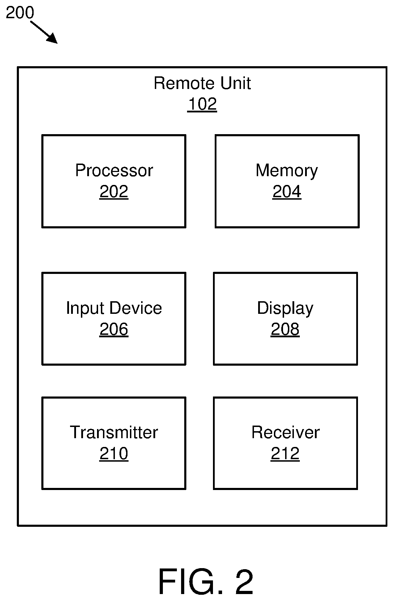

Figure 2 depicts one embodiment of an apparatus 200 that may be used for allocating resources based on field information. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the processor 202 is configured to cause the apparatus to: receive DCI that allocates SL resources, wherein the DCI includes a first field indicating whether the SL resources are allocated for a SL-PRS transmission; in response to the first field indicating that the SL resources are allocated for the SL-PRS transmission, perform the SL-PRS transmission based at least partly on the DCI; and, in response to the first field indicating that the SL resources are not allocated for the SL-PRS transmission, initiate PSSCH transmission.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

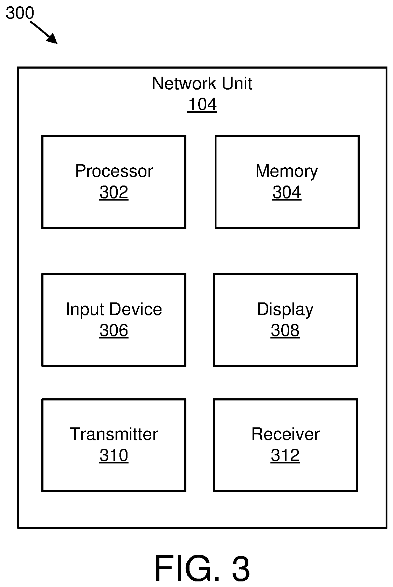

Figure 3 depicts one embodiment of an apparatus 300 that may be used for allocating resources based on field information. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, the processor 302 is configured to cause the apparatus to: transmit DCI that allocates SL resources, wherein the DCI includes a first field indicating whether the SL resources are allocated for a SL-PRS transmission; in response to the first field indicating that the SL resources are allocated for the SL-PRS transmission, receive the SL-PRS transmission based at least partly on the DCI; and, in response to the first field indicating that the SL resources are not allocated for the SL-PRS transmission, receive a PSSCH transmission. It should be noted that one or more embodiments described herein may be combined into a single embodiment.

In 3GPP, a Uu interface positioning framework is defined which enables UE-assisted and UE-based positioning methods. As used herein "Uu" refers to the wireless link/interface between a UE and a base station unit, such as gNB. However, the positioning frameworks may lack an efficient UE-to-UE range and/or orientation determination, which is essential to support relative positioning applications across different vertical services, e.g., vehicle-to-everything ("V2X"), public safety, industrial IoT ("IIoT"), commercial, etc. Thus, SL positioning techniques are to be developed, including various layer-1 ("L1") and layer-2 ("L2") procedures to support absolute and/or relative positioning - including range estimation - using SL resources. As may be appreciated, positioning may be across different scenarios (e.g., in-coverage, partial coverage, and out-of-coverage).

In certain embodiments, sidelink resource allocation may be used only for SL data transmissions. However, when supporting UE-to-UE ranging based services and sidelink positioning the resource allocation mechanism needs to consider SL-PRS transmissions. Since a gNB may be involved in a resource allocation procedure for SL-PRS, it needs to be ensured that the gNB is aware of the required SL positioning quality of service ("QoS") and/or accuracy of the associated positioning method and received SL positioning and/or ranging service request to allow for an efficient scheduling of SL-PRS resources.

Described herein are various embodiments for efficient resource allocation for SL-PRS when performing various SL positioning procedures. Several embodiments for incorporating SL-PRS transmissions within the SL resource allocation mechanism are found herein. A UE, when requesting sidelink resources from the gNB, may include information on the required QoS to be used by the gNB for SL-PRS scheduling. Some embodiments may include signaling details for DCI and/or sidelink control information ("SCI") allocating resources for SL-PRS.

Various supported positioning techniques are listed in Table 1.

**Table 1: Supported UE positioning methods**

| Method | UE-based | UE-assisted, LMF-based | NG-RAN node assisted | Secure User-Plane Location ("SUPL") |
|---|---|---|---|---|
| A-GNSS | Yes | Yes | No | Yes (UE-based and UE-assisted) |
| OTDOA ^{Note1, Note 2} | No | Yes | No | Yes (UE-assisted) |
| E-CID ^{Note 3} | No | Yes | Yes | Yes for E-UTRA (UE-assisted) |
| Sensor | Yes | Yes | No | No |
| Wireless LAN ("WLAN") | Yes | Yes | No | Yes |
| Bluetooth | No | Yes | No | No |
| TBS ^{Note 4} | Yes | Yes | No | Yes (MBS) |
| DL-TDOA | Yes | Yes | No | No |
| DL-AoD | Yes | Yes | No | No |
| Multi-RTT | No | Yes | Yes | No |
| NR E-CID | No | Yes | -- | No |
| UL-TDOA | No | No | Yes | No |
| UL-AoA | No | No | Yes | No |
| NOTE 1: This includes Terrestrial Beacon System ("TBS") positioning based on PRS signals. | | | | |
| NOTE 2: In this version of the specification only Observed Time Difference of Arrival ("OTDOA") based on LTE signals is supported. | | | | |
| NOTE 3: This includes Cell-ID for NR method. | | | | |
| NOTE 4: In this version of the specification only for TBS positioning based on Metropolitan Beacon System ("MBS") signals. | | | | |

NR positioning based on NR Uu signals and stand-alone ("SA") architecture (e.g., beam-based transmissions) may be used. Different use cases include commercial and regulatory (e.g., emergency services). Performance requirements are shown in Table 2.

**Table 2**

| Positioning Error | Indoor | Outdoor |
|---|---|---|
| Horizontal Positioning | < 3m for 80% of UEs | < 10m for 80% of UEs |
| Vertical Positioning | < 3m for 80% of UEs | < 3m for 80% of UEs |

Positioning may define positioning performance requirements for commercial and IIoT use cases as shown in Table 3.

**Table 3**

| Positioning Error | Commercial | IIoT |
|---|---|---|
| Horizontal Positioning | (< 1 m) for 90% of UEs | (< 0.2 m) for 90% of UEs; |
| Vertical Positioning | (< 3 m) for 90% of UEs | (< 1 m) for 90% of UEs |
| Physical layer latency for position estimation of UE | (< 10 ms) | (< 10 ms) |
| End-to-End Latency for position estimation of UE | (<100 ms) | (< 100 ms, in the order of 10 ms is desired) |

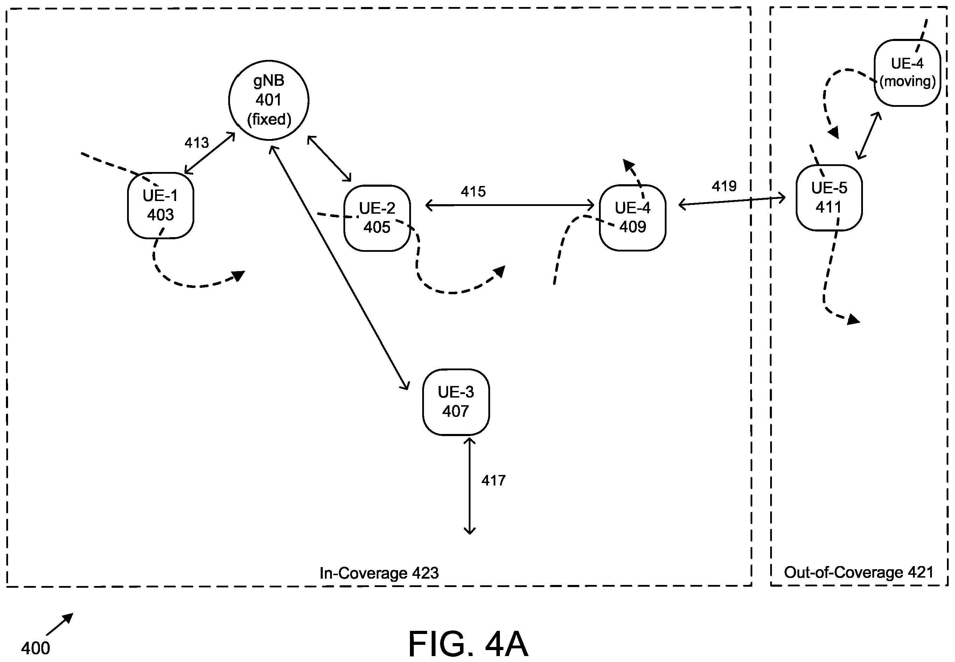

Figures 4A-4C depict an overview on absolute and relative positioning using different coordinate systems.

Figure 4A depicts an example of relative positioning using a variable coordinate system 400. In some embodiments, the coordinate system 400 may be used to determine relative positioning 413 between a first UE (denoted "UE-1") 403 and a 5G positioning node, such as the gNB 401 (having a fixed location), when the nodes are within 10 m of each other. In some embodiments, the coordinate system 400 may be used to determine relative positioning 415 between two or more UEs, such as the second UE (denoted "UE-2") 405 and the fourth UE (denoted "UE-2") 409, when the UEs are within 10 m of each other. In some embodiments, the coordinate system 400 may be used to determine vertical location 417 of a third UE (denoted "UE-2") 407 in terms of relative height (or depth) to a local ground level. In some embodiments, the coordinate system 400 may be used to determine relative positioning 419 between a fifth UE (denoted "UE-2") 411 that is out-of-coverage 421 of the network and one or more UEs that are within coverage 423 of the network (e.g., the UE-4), when the UEs are in proximity. The depicted gNBs may be embodiments of the network unit 104 and, while the UEs may be embodiments of the remote unit 102.

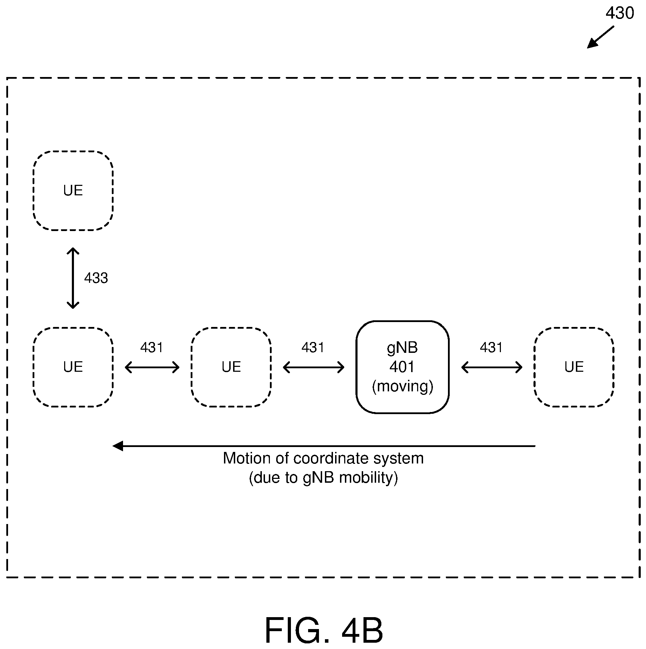

Figure 4B depicts an example of relative positioning using a variable and moving coordinate system 430. In contrast to the system 400, in the system 430 the gNB 401 is moving, so the coordinate system also moves relative to a fixed ground location. In some embodiments, the coordinate system 410 may be used to determine the relative longitudinal positions 431 (e.g., with accuracy of less than 0.5 m error) for UEs supporting V2X application for platooning in proximity. In some embodiments, the coordinate system 410 may be used to determine the relative lateral position 433 (e.g., with accuracy of less than 0.1 m error) between UEs supporting V2X applications. The depicted gNB 401 may be one embodiment of the network unit 104, while the UEs may be embodiments of the remote unit 102.

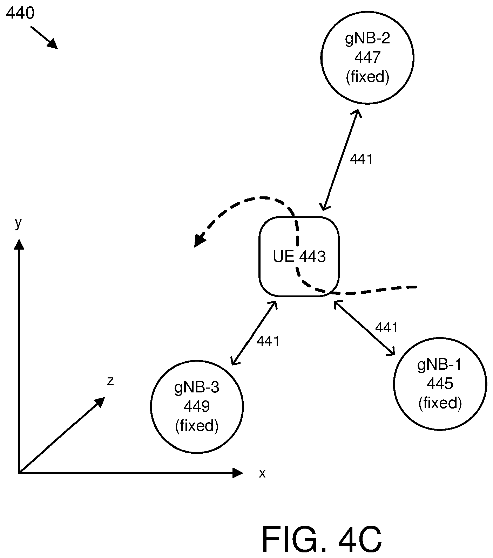

Figure 4C depicts an example of absolute positioning using a fixed coordinate system 440. In contrast to the systems 400 and 430, in the fixed coordinate system 440 there are multiple fixed gNBs. In some embodiments, the coordinate system 440 may be used to determine the absolute location 441 of the UE 443 using a first gNB 445, a second gNB 447 and a third gNB 449. In certain embodiments, the absolute location may be expressed using x, y, and z coordinates. The depicted gNBs may be embodiments of the network unit 104, while the UEs may be embodiments of the remote unit 102.

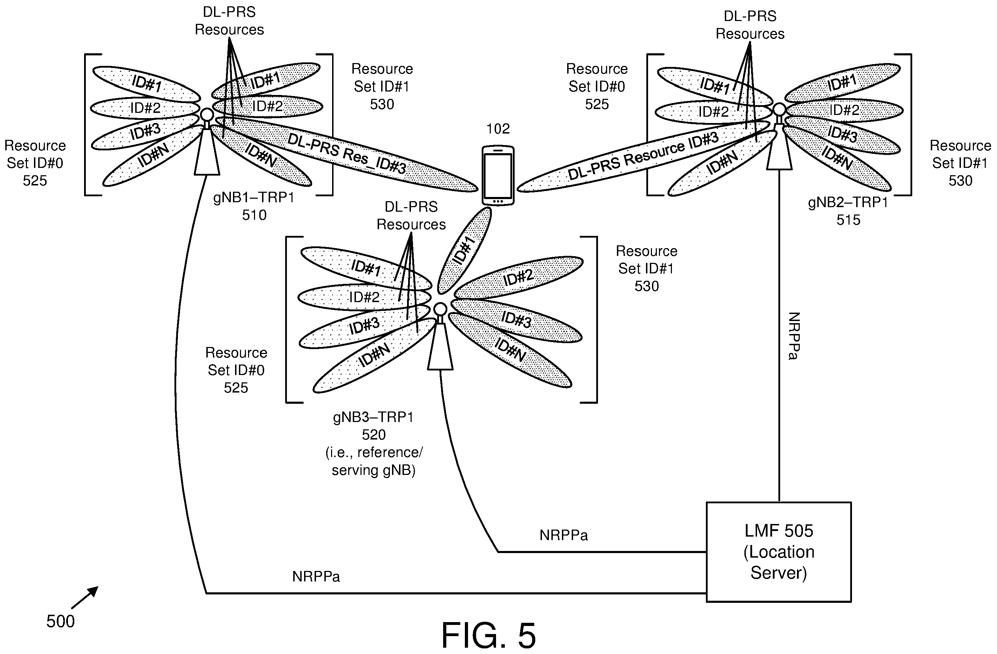

Figure 5 shows a diagram 500 for NR beam-based positioning measurements and reference signals ("RS"), according to embodiments of the disclosure. Here, the downlink positioning reference signal ("DL-PRS") can be transmitted by different base stations (serving gNB and neighboring gNB) using narrow beams over Frequency Range #1 Between ("FR1", i.e., frequencies from 410 MHz to 7125 MHz) and Frequency Range #2 ("FR2", i.e., frequencies from 24.25 GHz to 52.6 GHz), which is relatively different when compared to LTE where the PRS was transmitted across the whole cell. As illustrated in Figure 5, a remote unit 102 may receive DL-PRS from a neighboring first gNB/transmission and reception point ("TRP") (denoted "gNB1-TRP1") 510, from a neighboring second gNB (denoted "gNB2-TRP1") 515, and also from a third gNB/TRP (denoted "gNB3-TRP1") 520 which is a reference or serving gNB.

Here, the DL-PRS can be locally associated with a DL-PRS Resource Identifier ("ID") and Resource Set ID for a base station (i.e., TRP). In the depicted embodiments, each gNB 510, 515, 520 is configured with a first Resource Set ID (depicted as "Resource Set ID#0") 525 and a second Resource Set ID (depicted as "Resource Set ID#1") 530. As depicted, the UE 205 receives DL-PRS on transmission beams; here, receiving DL-PRS from the gNB1-TRP1 510 on DL-PRS Resource ID #3 from the second Resource Set ID ("Resource Set ID#1") 530, receiving DL-PRS from the gNB2-TRP1 515 on DL-PRS Resource ID #3 from the first Resource Set ID ("Resource Set ID#0") 525, and receiving DL-PRS from the gNB3-TRP1 520 on DL-PRS Resource ID #1 from the second Resource Set ID ("Resource Set ID#1") 530.

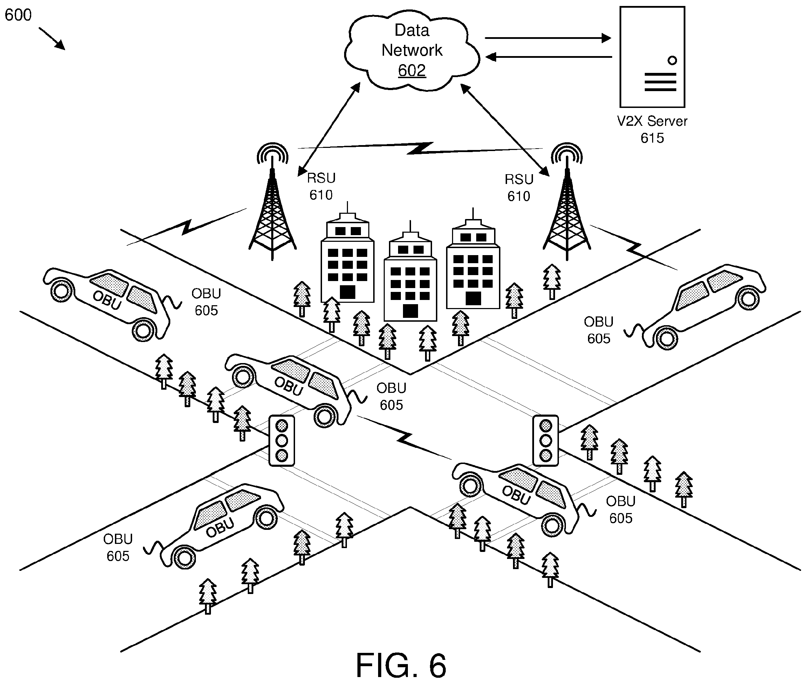

Figure 6 depicts an exemplary system architecture 600 for VANET, according to embodiments of the disclosure. A VANET consists of groups of moving or stationary vehicles connected by a wireless network. In the depicted implementation, the system architecture 600 involves a plurality of On-board Units ("OBUs") 605, which may be moving or stationary. The OBUs 605 may be embodiments of the remote unit 102. One or more OBUs may be in communication with at least one of a plurality of Road Side Units ("RSUs") 610. The RSUs 610 may be embodiments of the network unit 104. The RSUs 610 may communicate with each other via wireless communication and/or via a data network 602. Additionally, via the data network 602, the RSUs 610 may be in communication with a V2X server 615. Note that the OBUs 605 may also communicate with the V2X server 615 via the RSUs 610. In various embodiments, the VANET entities may perform.

For the purposes of this disclosure, a positioning-related reference signal may be referred to as a reference signal used for positioning procedures/purposes in order to estimate a target-UE's location, e.g., PRS, or based on existing reference signals such as Channel State Information Reference Signal ("CSI-RS") or Sounding Reference Signal ("SRS"); a target-UE may be referred to as the device/entity to be localized/positioned. In various embodiments, the term "PRS" may refer to any signal such as a reference signal, which may be used for positioning, even if the signal is not used primarily for positioning.

SL positioning techniques include, but are not limited to, round trip time ("RTT")-type solutions using SL (to include both single-sided (also known as one-way) and double-sided (also known as two-way) RTT); Sidelink Angle-of-Arrival ("SL-AoA") (to include both A-AoA and Z-AoA); SL-TDOA (makes use of the SL reference signal time difference ("RSTD") (and optionally SL-PRS reference signal received power ("RSRP")) of SL signals received from multiple TRPs, at the UE); Sidelink Angle-of-Departure ("SL-AoD") (corresponds to a method where RSRP and/or RSRPP measurements similar to the DL-AoD method in Uu, to include both Azimuth Angle-of-Departure ("A-AoD") and Zenith Angle-of-Departure ("Z-AoD")).

Regarding SL discontinuous reception ("DRX") operation, when SL DRX is configured, the Active Time includes the time: A) while *sl-drx-onDurationTimer* or *sl-drx-InactivityTimer* is running; or B) while *sl-drx-RetransmissionTimer* is running; or C) during the period of *sl-LatencyBoundCSI-Report* configured by radio resource control ("RRC") in case SL-CSI reporting MAC control element ("CE") is not received; or D) while the time between the transmission of the request of SL-CSI reporting and the reception of the SL-CSI reporting MAC CE in case SL-CSI reporting MAC CE is received; or E) during a slot associated with the announced periodic transmissions by the UE transmitting SL-SCH Data.

When one or multiple SL DRX is configured, and if multiple SL DRX Cycles that are mapped with multiple *SL-QoS-Profiles* of a Destination Layer-2 ID and interested cast type is associated to groupcast or broadcast, then the MAC entity selects *sl-drx-Cycle* whose length of the *sl-drx-cycle* is the shortest one among multiple SL DRX Cycles that are mapped with multiple *SL-QoS-Profiles* associated with the Destination Layer-2 ID. Additionally, the MAC entity selects *sl-drx-onDurationTimer* whose length of the *sl-drx-onDurationTimer* is the longest one among multiple SL DRX onDuration timers that are mapped with multiple *SL-QoS-Profiles* associated with the Destination Layer-2 ID.

When one or multiple SL DRX is configured, and if an sl-drx-HARQ-RTT-Timer expires, then if the data of the corresponding Sidelink process was not successfully decoded or if the HARQ feedback (i.e., negative acknowledgement) is not transmitted for unicast due to UL/SL prioritization, then the MAC entity starts the sl-drx-RetransmissionTimer for the corresponding Sidelink process in the first slot after the expiry of sl-drx-HARQ-RTT-Timer.

When the cast type is groupcast or broadcast as indicated by upper layer, the sl-drx-StartOffset and sl-drx-SlotOffset are derived from the following equations: $sl - drx - StartOffset \left(ms\right) = Destination Layer - 2 ID modulo sl - drx - Cycle$ $sl - drx - SlotOffset \left(ms\right) = Destination Layer - 2 ID modulo the number of slots in one subframe$

When the cast type is groupcast or broadcast, and if the SL DRX cycle is used, and [(DFN × 10) + subframe number] modulo (*sl-drx-Cycle*) = *sl-drx-StartOffset,* then the MAC entity starts *sl-drx-onDurationTimer* after *sl-drx-SlotOffset* from the beginning of the subframe.

If an SL DRX is in Active Time, then the MAC entity monitors the SCI (i.e., 1^{st} stage SCI and 2^{nd} stage SCI) in this SL DRX. Then, if the SCI indicates a new SL transmission, and if the Source Layer-1 ID of the SCI is equal to the 8 least significant bit ("LSB") of the intended Destination Layer-2 ID and Destination Layer-1 ID of the SCI is equal to the 16 LSB of the intended Source Layer-2 ID and the cast type indicator in the SCI is set to unicast, then the MAC entity starts (or restarts) *sl-drx-InactivityTimer* for the corresponding Source Layer-2 ID and Destination Layer-2 ID pair after the first slot of SCI reception.

Further, if the SCI indicates a new SL transmission, and if the Destination Layer-1 ID of the SCI (i.e., 2^{nd} stage SCI) is equal to the 16 LSB of the intended Destination Layer-1 ID and the cast type indicator in the SCI is set to groupcast, then the MAC entity selects the *sl-drx-InactivityTimer* whose length is the largest one among multiple SL DRX Inactivity timers that are mapped to multiple SL-QoS-Profiles of Destination Layer-2 ID associated with the Destination Layer-1 ID of the SCI. Additionally, the MAC entity starts (or restarts) *sl-drx-InactivityTimer* for the corresponding Destination Layer-2 ID after the first slot of SCI reception.

When an SL DRX is in Active Time, and if the SCI indicates an SL transmission, then if a next retransmission opportunity is scheduled in the SCI, the MAC entity derives the *sl-drx-HARQ-RTT-Timer* from the retransmission resource timing of the next retransmission resource in the SCI. Else, the MAC entity uses the *sl-drx-HARQ-RTT-Timer* configured by upper layers.

When the SCI indicates an SL transmission, then if a physical sidelink feedback channel ("PSFCH") resource is not configured for the SL grant associated to the SCI, then the MAC entity starts the *sl-drx-HARQ-RTT-Timer* for the corresponding Sidelink process in the slot following the end of PSSCH transmission (i.e., currently received PSSCH).

However, if a PSFCH resource is configured for the SL grant associated to the SCI, then if HARQ feedback is enabled by the SCI and the cast type indicator in the SCI is set to unicast, or if HARQ feedback is enabled by the SCI and the cast type indicator in the SCI is set to groupcast and positive-negative acknowledgement is selected, then the MAC entity starts the *sl-drx-HARQ-RTT-Timer* for the corresponding Sidelink process in the first slot after the end of the corresponding PSFCH transmission carrying the SL HARQ feedback. Alternatively, the MAC entity starts the *sl-drx-HARQ-RTT-Timer* for the corresponding Sidelink process in the first slot after the end of the corresponding PSFCH resource for the SL HARQ feedback when the SL HARQ feedback is not transmitted due to UL/SL prioritization.

When the PSFCH resource is configured for the SL grant associated to the SCI, if HARQ feedback is enabled by the SCI and the cast type indicator in the SCI is set to groupcast and negative-only acknowledgement is selected, then the MAC entity starts the *sl-drx-HARQ-RTT-Timer* for the corresponding Sidelink process in the first slot after the end of the corresponding PSFCH transmission carrying the SL HARQ feedback. Alternatively, the MAC entity starts the *sl-drx-HARQ-RTT-Timer* for the corresponding Sidelink process in the first slot after the end of the corresponding PSFCH resource for the SL HARQ feedback when the SL HARQ feedback is not transmitted due to UL/SL prioritization. Alternatively, the MAC entity starts the *sl-drx-HARQ-RTT-Timer* for the corresponding Sidelink process in the first slot after the end of the corresponding PSFCH resource for the SL HARQ feedback when the SL HARQ feedback is a positive acknowledgement.

When the PSFCH resource is configured for the SL grant associated to the SCI, then if HARQ feedback is disabled by the SCI and the resource(s) for one or more retransmission opportunities is not scheduled in the SCI, the MAC entity starts the *sl-drx-HARQ-RTT-Timer* for the corresponding Sidelink process in the slot following the end of PSFCH resource.

When the PSFCH resource is configured for the SL grant associated to the SCI, then if HARQ feedback is disabled by the SCI and the resource(s) for one or more retransmission opportunities is scheduled in the SCI, then the MAC entity starts the *sl-drx-HARQ-RTT-Timer* for the corresponding Sidelink process in the slot following the end of PSSCH transmission (i.e., currently received PSSCH). Further, the MAC entity stops the *sl-drx-RetransmissionTimer* for the corresponding Sidelink process.

When the cast type is groupcast or broadcast, if an SL DRX Command MAC CE is received for the Source Layer-2 ID and Destination Layer-2 ID pair of a unicast, then the MAC entity stops *sl-drx-onDurationTimer* for the Source Layer-2 ID and Destination Layer-2 ID pair of a unicast. Additionally, the MAC entity stops *sl-drx-InactivityTimer* for the Source Layer-2 ID and Destination Layer-2 ID pair of a unicast.

Regarding the UE behavior when transmitting SL-SCH Data during SL DRX operation, the UE transmitting SL-SCH Data should keep aligned with its intended UE receiving the SL-SCH Data regarding the SL DRX Active time as described above. Furthermore, the UE transmitting SL-SCH Data determines the SL DRX Active time based on SL DRX timers that are running (e.g., *sl-drx-onDurationTimer, sl-drx-InactivityTimer, sl-drx-RetransmissionTimer)* or will be running in the future (e.g., *sl-drx-onDurationTimer, sl-drx-InactivityTimer, sl-drx-RetransmissionTimer)* at the UE(s) receiving SL-SCH data.

The UE may select resource for the initial transmission of groupcast within the time when *sl-drx-onDurationTimer* or *sl-drx-InactivityTimer* of the destination is running. Note that a UE may assume that a resource for retransmission is in the Active time if an initial transmission causes the *sl-drx-RetransmissionTimer* to be started at the receiving UE.

According to current 3GPP specifications, the SL DRX operation would not cater for SL-PRS transmissions. This may lead to situation where UEs participating in a positioning session are not awake and ready to receive SL-PRS transmission from initiating UEs. On the other hand, if UEs participating in a sidelink positioning session would be always active and monitor for potential SL-PRS transmission would harm the battery drain. By extending the SL DRX scheme to also cater for SL-PRS transmission such negative effects can be avoided.

An initiator device, as used herein, initiates a SL positioning/ranging session, may be a network entity (e.g., gNB, location management function ("LMF")), a UE, and/or a roadside unit ("RSU"). A RSU refers to a transportation infrastructure entity (e.g., an entity transmitting speed notifications or other V2X-related notifications). An RSU performing UE-like behaviors is referred to as a UE-type RSU, while an RSU performing BS-like behaviors is referred to as a gNB-type RSU.

A responder device, as used herein, responds to a SL positioning/ranging session from an initiator device, may be a network entity, (e.g., gNB, LMF), a UE and/or an RSU.

A Target-UE, as used herein, refers to as a UE of interest whose position (absolute or relative) is to be obtained by the network and/or by the UE itself.

Sidelink positioning, as used herein, refers to using reference signals transmitted over SL, i.e., UE-to-UE ("PC5") interface, to obtain absolute position, relative position, or ranging information.

Ranging, as used herein, refers to the determination of the distance and/or the direction between a UE and another entity, e.g., anchor UE.

SL-PRS, as used herein, refers to reference signal transmitted over SL for positioning purposes.

SL-PRS (pre-)configuration: (pre-)configured parameters of SL-PRS such as time-frequency resources (other parameters are not precluded) including its bandwidth and periodicity.

Anchor UE, as used herein, refers to a UE supporting positioning of a Target-UE, e.g., by transmitting and/or receiving reference signals for positioning, providing positioning-related information, etc., over the SL interface. An anchor UE may also be referred to as SL Reference UE.

Assistant UE, as used herein, refers to a UE supporting Ranging/Sidelink between a SL Reference UE and Target-UE over PC5, when the direct Ranging/Sidelink positioning between the SL Reference UE/Anchor UE and the Target-UE cannot be supported. The measurement/results of the Ranging/Sidelink Positioning between the Assistance UE and the SL Reference UE and that between the Assistance UE and the Target-UE are determined and used to derive the Ranging/Sidelink Positioning results between Target-UE and SL Reference UE.

SL Positioning Server UE, as used herein, refers to a UE offering location server functionality in lieu of LMF, for Sidelink Positioning and Ranging over Sidelink. It interacts with a Target-UE, Reference UEs, Assistant UE and Located UEs as necessary in order to calculate the location of the Target-UE.

SL Positioning Client UE, as used herein, refers to a UE offering location calculation, for SL Positioning and Ranging based service. It interacts with other UEs over PC5 as necessary in order to calculate the location of the Target-UE. The Target-UE or SL Reference UE can act as SL Positioning server UE if location calculation is supported.

SL positioning node, as used herein, may refer to a network entity and/or device/UE participating in a SL positioning session, e.g., LMF (location server), gNB, UE, RSU, anchor UE, Initiator and/or Responder UE.

Configuration entity, as used herein, refers to a network node or device/UE capable of configuring time-frequency resources and related SL positioning configurations.

Various embodiments herein correspond to resource allocation for SL-PRS.

In a first embodiment, MAC control signaling is used to request sidelink resources for SL-PRS from a gNB. In one example, a sidelink UE is requesting SL resources for SL-PRS transmission from the gNB by transmitting a new MAC control element. According to one implementation of the first embodiment, the new MAC CE for requesting resources for SL-PRS is mapped to a SR configuration, which is configured by RRC. In one example, the UE, e.g., MAC layer, triggers the transmission of a SR for cases if the UE has no available uplink resources for the transmission of the new SL-PRS MAC CE. According to some alternative implementations of the embodiment, any SR configuration may be used for an SR triggered by the new MAC requesting resources for SL-PRS transmission.

According to one implementation of the first embodiment, the new MAC CE used for requesting resources for SL-PRS transmission is identified by a MAC subheader with a predefined logical channel identifier ("LCID") and has a fixed size of zero bits. According to some alternative implementations of the first embodiment, the new MAC CE carries assistance information used for the allocation of SL-PRS resources in the gNB. In one example, the assistance information provides information on the required SL positioning QoS and/or accuracy of the associated positioning method and received SL positioning and/or ranging service request. In another example, the assistance information includes the SL positioning latency to achieve the end-to-end absolute and/or relative positioning fix and/or estimate and/or the required SL positioning reliability. According to one implementation of the first embodiment, the MAC CE includes a set of SL-PRS parameters suggested by the requesting UE for the corresponding SL-PRS transmission. Example SL-PRS parameters include PRS comb-size, bandwidth (e.g., maximum), PRS resources or resource sets, repetition, periodicity, resource element pattern shifting, and/or frequency layers.

In a second embodiment, a DCI allocating sidelink resources includes a field indicating whether the sidelink resources are for a SL data transmission on PSSCH or for a SL-PRS transmission. According to one implementation of the second embodiment, the new field within a DCI indicating the SL transmission type is a one-bit flag. For cases when the UE is configured with mode 1 resource allocation mode for SL-PRS transmissions, the gNB explicitly allocates SL resources for the transmission of SL-PRS to a UE by means of a DCI. According to another implementation of the second embodiment, the new data indicator ("NDI") field and/or the HARQ process ID field are set to a predefined value if the DCI allocates SL resources for a SL-PRS transmission. In one example, the DCI is a DCI format 3_0.

In a third embodiment, a resource pool index within a DCI allocating sidelink resources for a SL-PRS transmission is set to a predefined value. In another embodiment, the resource pool index within a DCI is set to an index value which points to a resource pool which is reserved for SL-PRS transmission indicates that the resource allocation is for a SL-PRS transmission. If the DCI schedules a SL-PRS transmission by the resource pool index field within the DCI being set to a specific value, the NDI field and/or the HARQ process ID field of the DCI is set to some predefined values. In one example, the NDI field and/or HARQ process ID field within a DCI scheduling SL-PRS transmission are repurposed (e.g., indicating the start time, duration, periodicity, or repetition number of SL-PRS resources).

In a fourth embodiment, a sidelink resource configuration for SL-PRS transmissions is provided by higher layer signaling (e.g., RRC signaling), and its activation and/or deactivation is signaled via a PDCCH (e.g., SL DCI). In one example, a set of SL-PRS resource configurations are configured by RRC signaling and a DCI is used to activate one of the preconfigured SL-PRS resource configurations. In one example, the set of SL-PRS resource configuration is configured for a resource pool. According to one implementation of the fourth embodiment, the DCI activating and/or deactivating a configured SL-PRS resource configuration includes an identifier pointing to the SL-PRS configuration within the set of preconfigured SL-PRS resource configurations.

In one example, RRC signaling only provides higher layer parameters of a SL-PRS configuration (e.g., like periodicity, number of SL-PRS transmissions, and so forth). The DCI signaling may enable fast modification of semi-persistently allocated SL resources. In this way, it enables the flexibility of semi-persistent SL-PRS transmissions in terms of required SL positioning QoS and/or accuracy of the associated positioning method and received SL positioning and/or ranging service request. According to one implementation of the third embodiment, a DCI activating a SL-PRS configuration carries SL grant information (e.g., time-domain information and/or resources, frequency-domain resources, comb-based time-frequency RE mapping information, and other related parameters). In one example, a UE, upon receiving a DCI activating a preconfigured SL-PRS configuration, validates the activation DCI and performs the SL-PRS transmissions according to the resource allocation given by RRC and DCI signaling. The term validation may be generally understood as a functional procedure in the UE used to ensure that a DCI represents a valid PDCCH by identifying at least specific fields included in the DCI. In one example, a set of fields within the DCI activating SL-PRS is set to predefined values. Responsive to the reception of a DCI, a UE checks whether a set of fields within the DCI matches the corresponding predefined values. Only if the validation is successful, the UE executes the SL-PRS activation. In one example, a DCI indicates a number of SL-PRS transmissions to be performed by a UE.

In a fifth embodiment, a UE doesn't consider slots and/or symbols where a SL-PRS transmission is scheduled to be valid sidelink resources for SL data transmission. According to one implementation of the fifth embodiment, the UE which is configured with mode 2 resource allocation mode doesn't consider SL slots and/or symbols which are allocated for SL-PRS transmission as a candidate resource for sidelink communication (e.g., data transmission) while performing resource selection procedure.

In a sixth embodiment, a UE skips an UL grant (e.g., allocated by a gNB) if the allocated SL resources overlap with a SL-PRS transmission. According to one implementation of the sixth embodiment, the UE prioritizes SL-PRS transmissions over SL data transmission if there are (partially) overlapping resources.

According to some embodiments, a UE compares a priority of a SL-PRS transmission and the priority of a colliding SL data transmission (e.g., PSSCH transmission) and performs a higher priority transmission when SL-PRS transmission and SL data transmission collide (e.g., including any required corresponding SCI and/or physical sidelink control channel ("PSCCH") transmission). In one example, the priority of a SL-PRS transmission is determined as a priority indicated within the SCI accompanying a SL-PRS transmission.

According to one implementation of such embodiment, a UE (e.g., MAC), triggers a resource reselection for the SL-PRS resources if the UE doesn't perform a SL-PRS transmission due to higher priority colliding SL data (e.g., PSSCH) transmission.

In certain embodiments, a UE informs a gNB about selected SL-PRS resources to avoid a collision and/or overlap of SL-PRS transmission with SL resources for SL communication (e.g., data).

In a seventh embodiment, a reserved SL-PRS transmission may be pre-empted by another higher priority SL-PRS transmission and/or SL data transmission. Using the pre-emption mechanism, a UE may use one or more of the resources that were originally reserved by another UE for lower-priority SL-PRS transmission and/or SL data transmission. The priority of a SL-PRS may be related to the required SL positioning QoS and/or accuracy of the associated positioning method and received SL positioning and/or ranging service request. In one example, the priority of the SL-PRS transmission is signaled within the accompanying SCI.

In an eighth embodiment, a sidelink UE may be configured with a first resource allocation mode for the transmission of sidelink data and a second resource allocation mode for the transmission of SL-PRS. In one implementation of the eighth embodiment, the first resource allocation mode is different to the second resource allocation mode. In one example, the UE could be configured with mode 1 for SL data communication (e.g., SL resources for the transmission of PSSCH are allocated and/or scheduled by a gNB), whereas the UE autonomously selects the SL resources for SL-PRS transmissions.

In a nineth embodiment, a UE includes the slots and/or symbols where a SL-PRS transmission is scheduled in the set of non-preferred resources when generating a inter-UE coordination ("IUC") report. A SL UE may support IUC, whereby a UE-A sends information about resources to UE-B, which the UE-B then uses for resource selection (or reselection). There are two schemes supported for IUC: 1) IUC scheme 1, where the coordination information sent from a UE-A to a UE-B is the preferred or non-preferred resources for UE-B's transmission; and 2) IUC scheme 2, where the coordination information sent from a UE-A to a UE-B is the presence of expected and/or potential resource conflict on the resources indicated by UE-B's SCI.

According to one implementation of the nineth embodiment, a SL UE determines the set of resources used by SL-PRS and includes those resources in the set of non-preferred slots. The UE includes the slots reserved by other UEs or slots where the UE-A, when it is the intended receiver of UE-B, does not expect to perform SL reception from UE-B due to half-duplex operation in the set of non-preferred resources.

In a tenth embodiment, SCI includes a field requesting the transmission of SL-PRS from the recipient UEs and/or destinations. In one example, the field is a one-bit flag which indicates the SL-PRS transmission request when set to a predefined value (e.g., '1'). In another example, a target UE may request the transmission of SL-PRS from an anchor UE by sending the SCI with the field set to the predefined value. According to one implementation of the tenth embodiment, the SCI has no associated PSSCH (e.g., SCI-only transmission). According to another implementation of the tenth embodiment, a new MAC control element is used to request SL-PRS transmission. The MAC CE may be identified by a MAC subheader with a predefined LCID and may have a fixed size of zero bits. According to some implementations of the tenth embodiment, the new MAC CE carries assistance information used for the selection of the SL-PRS transmission parameter in an anchor UE. In one example, the assistance information provides information on the required SL positioning QoS and/or accuracy of the associated positioning method and received SL positioning and/or ranging service request. In another example, the assistance information includes the SL positioning latency to achieve the end-to-end absolute and/or relative positioning fix and/or estimate and/or the required SL positioning reliability. According to one implementation of the tenth embodiment, the MAC CE includes a set of SL-PRS resource allocation parameters suggested by the requesting UE (e.g., target UE), for the corresponding SL-PRS transmission.

According to one implementation of the tenth embodiment, a UE starts a timer in response to the reception of a SL-PRS request (e.g., message). In one example, an anchor UE, when receiving a SL-PRS transmission request from a target UE, starts a timer which indicates the maximum delay bound for the SL-PRS transmission. In a different example, the timer is set to a value signaled within the SL-PRS transmission request. In another example, the timer value is preconfigured or fixed in the specification. Upon expiry of the timer, the UE (e.g., anchor UE) will stop making SL-PRS transmission since SL-PRS transmission would be beyond the maximum allowed delay budget and of limited or no use anymore. Generally, the UE being requested to perform SL-PRS transmissions may ensure that the SL-PRS occurs within the delay budget (e.g., while the timer is running).

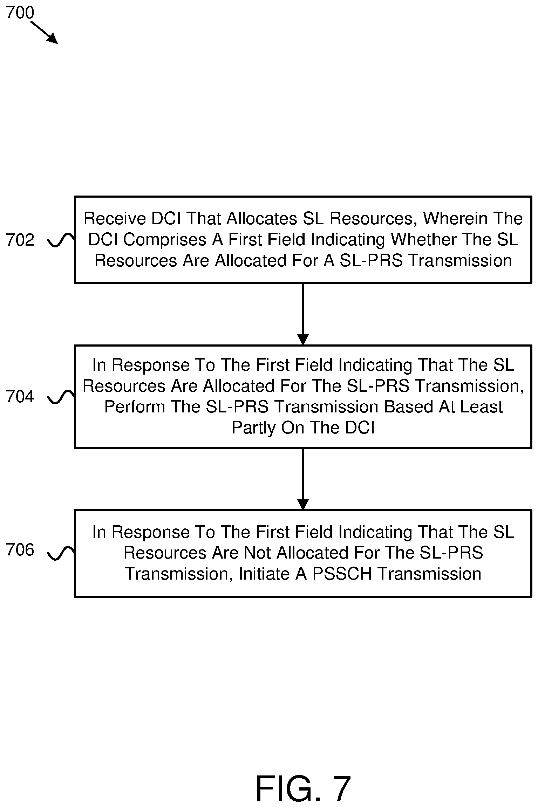

Figure 7 is a flow chart diagram illustrating one embodiment of a method 700 for allocating resources based on field information. In some embodiments, the method 700 is performed by an apparatus, such as the remote unit 102. In certain embodiments, the method 700 may be performed by a processor executing program code, for example, a microcontroller, a microprocessor, a CPU, a GPU, an auxiliary processing unit, a FPGA, or the like.

In various embodiments, the method 700 includes receiving 702 DCI that allocates SL resources. The DCI includes a first field indicating whether the SL resources are allocated for a SL-PRS transmission. In some embodiments, the method 700 includes, in response to the first field indicating 704 that the SL resources are allocated for the SL-PRS transmission, performing the SL-PRS transmission based at least partly on the DCI. In certain embodiments, the method 700 includes, in response to the first field indicating 706 that the SL resources are not allocated for the SL-PRS transmission, initiating a PSSCH transmission.

In certain embodiments, the DCI comprises a second field and a third field, and, in response to the first field indicating that the SL resources are allocated for the SL-PRS transmission, the second field and the third field are set to predefined values. In some embodiments, the DCI activates a higher layer SL-PRS configuration. In various embodiments, the higher layer SL-PRS configuration is received by RRC signaling.

In one embodiment, the method 700 further comprises transmitting a request for the DCI that allocates the SL resources. In certain embodiments, the request comprises a MAC CE.

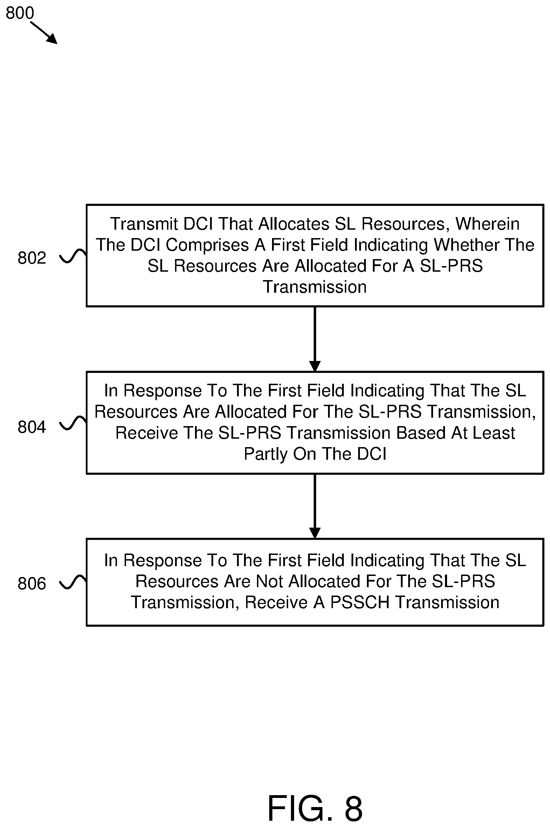

Figure 8 is a flow chart diagram illustrating another embodiment of a method 800 for allocating resources based on field information. In some embodiments, the method 800 is performed by an apparatus, such as the network unit 104. In certain embodiments, the method 800 may be performed by a processor executing program code, for example, a microcontroller, a microprocessor, a CPU, a GPU, an auxiliary processing unit, a FPGA, or the like.

In various embodiments, the method 800 includes transmitting 802 DCI that allocates SL resources. The DCI includes a first field indicating whether the SL resources are allocated for a SL-PRS transmission. In some embodiments, the method 800 includes, in response to the first field indicating 804 that the SL resources are allocated for the SL-PRS transmission, receiving the SL-PRS transmission based at least partly on the DCI. In certain embodiments, the method 800 includes, in response to the first field indicating 806 that the SL resources are not allocated for the SL-PRS transmission, receiving a PSSCH transmission.

In certain embodiments, the DCI comprises a second field and a third field, and, in response to the first field indicating that the SL resources are allocated for the SL-PRS transmission, the second field and the third field are set to predefined values. In some embodiments, the DCI activates a higher layer SL-PRS configuration. In various embodiments, the higher layer SL-PRS configuration is received by RRC signaling.

In one embodiment, the method 800 further comprises receiving a request for the DCI that allocates the SL resources. In certain embodiments, the request comprises a MAC CE.

In one embodiment, an apparatus comprises: a processor; and a memory coupled to the processor, the processor configured to cause the apparatus to: receive DCI that allocates SL resources, wherein the DCI comprises a first field indicating whether the SL resources are allocated for a SL-PRS transmission; in response to the first field indicating that the SL resources are allocated for the SL-PRS transmission, perform the SL-PRS transmission based at least partly on the DCI; and in response to the first field indicating that the SL resources are not allocated for the SL-PRS transmission, initiate PSSCH transmission.

In certain embodiments, the DCI comprises a second field and a third field, and, in response to the first field indicating that the SL resources are allocated for the SL-PRS transmission, the second field and the third field are set to predefined values.

In some embodiments, the DCI activates a higher layer SL-PRS configuration.

In various embodiments, the higher layer SL-PRS configuration is received by RRC signaling.

In one embodiment, the processor is configured to cause the apparatus to transmit a request for the DCI that allocates the SL resources.

In certain embodiments, the request comprises a MAC CE.

In one embodiment, a method at a UE, the method comprises: receiving DCI that allocates SL resources, wherein the DCI comprises a first field indicating whether the SL resources are allocated for a SL-PRS transmission; in response to the first field indicating that the SL resources are allocated for the SL-PRS transmission, performing the SL-PRS transmission based at least partly on the DCI; and in response to the first field indicating that the SL resources are not allocated for the SL-PRS transmission, initiating a PSSCH transmission.

In certain embodiments, the DCI comprises a second field and a third field, and, in response to the first field indicating that the SL resources are allocated for the SL-PRS transmission, the second field and the third field are set to predefined values.

In some embodiments, the DCI activates a higher layer SL-PRS configuration.

In various embodiments, the higher layer SL-PRS configuration is received by RRC signaling.

In one embodiment, the method further comprises transmitting a request for the DCI that allocates the SL resources.

In certain embodiments, the request comprises a MAC CE.

In one embodiment, an apparatus comprises: a processor; and a memory coupled to the processor, the processor configured to cause the apparatus to: transmit DCI that allocates SL resources, wherein the DCI comprises a first field indicating whether the SL resources are allocated for a SL-PRS transmission; in response to the first field indicating that the SL resources are allocated for the SL-PRS transmission, receive the SL-PRS transmission based at least partly on the DCI; and in response to the first field indicating that the SL resources are not allocated for the SL-PRS transmission, receive a PSSCH transmission.

In certain embodiments, the DCI comprises a second field and a third field, and, in response to the first field indicating that the SL resources are allocated for the SL-PRS transmission, the second field and the third field are set to predefined values.

In some embodiments, the DCI activates a higher layer SL-PRS configuration.

In various embodiments, the higher layer SL-PRS configuration is received by RRC signaling.

In one embodiment, the processor is configured to cause the apparatus to receive a request for the DCI that allocates the SL resources.

In certain embodiments, the request comprises a MAC CE.

In one embodiment, a method at a network device, the method comprises: transmitting DCI that allocates SL resources, wherein the DCI comprises a first field indicating whether the SL resources are allocated for a SL-PRS transmission; in response to the first field indicating that the SL resources are allocated for the SL-PRS transmission, receiving the SL-PRS
transmission based at least partly on the DCI; and in response to the first field indicating that the SL resources are not allocated for the SL-PRS transmission, receiving a PSSCH transmission.

In certain embodiments, the DCI comprises a second field and a third field, and, in response to the first field indicating that the SL resources are allocated for the SL-PRS transmission, the second field and the third field are set to predefined values.

In some embodiments, the DCI activates a higher layer SL-PRS configuration.

In various embodiments, the higher layer SL-PRS configuration is received by RRC signaling.

In one embodiment, the method further comprises receiving a request for the DCI that allocates the SL resources.

In certain embodiments, the request comprises a MAC CE.

Embodiments may be practiced in other specific forms. The described embodiments are to be considered in all respects only as illustrative and not restrictive. The scope of the invention is indicated by the appended claims.

## Claims

1. A user equipment, UE, (200) comprising:
at least one memory (204); and
at least one processor (202) coupled with the at least one memory (204) and configured to cause the UE (200) to:
receive downlink control information, DCI, that allocates sidelink, SL, resources, wherein the DCI comprises a first field indicating whether the SL resources are allocated for a SL positioning reference signal, PRS, SL-PRS, transmission;
in response to the first field indicating that the SL resources are allocated for the SL-PRS transmission, perform the SL-PRS transmission based at least partly on the DCI; and
in response to the first field indicating that the SL resources are not allocated for the SL-PRS transmission, initiate a physical SL shared channel, PSSCH, transmission.

2. The UE (200) of claim 1, wherein the DCI comprises a second field and a third field, and, in response to the first field indicating that the SL resources are allocated for the SL-PRS transmission, the second field and the third field are set to predefined values.

3. The UE (200) of claim 1, wherein the DCI activates a higher layer SL-PRS configuration.

4. The UE of claim 3, wherein the higher layer SL-PRS configuration is received by radio resource control, RRC, signaling.

5. The UE (200) of claim 1, wherein the at least one processor is configured to cause the UE to transmit a request for the DCI that allocates the SL resources.

6. The UE (200) of claim 5, wherein the request comprises a medium access control, MAC, control element, CE.

7. A method (700) performed by a user equipment, UE, the method (700) comprising:
receiving (702) downlink control information, DCI, that allocates sidelink, SL, resources, wherein the DCI comprises a first field indicating whether the SL resources are allocated for a SL positioning reference signal, PRS, SL-PRS, transmission;
in response to the first field indicating that the SL resources are allocated for the SL-PRS transmission, performing (704) the SL-PRS transmission based at least partly on the DCI; and
in response to the first field indicating that the SL resources are not allocated for the SL-PRS transmission, initiating (706) a physical SL shared channel, PSSCH, transmission.

8. An apparatus (300) for performing a network function, the apparatus (300) comprising:
at least one memory (304); and
at least one processor (302) coupled with the at least one memory (304) and configured to cause the apparatus (300) to:
transmit downlink control information, DCI, that allocates sidelink, SL, resources, wherein the DCI comprises a first field indicating whether the SL resources are allocated for a SL positioning reference signal, PRS, SL-PRS, transmission;
in response to the first field indicating that the SL resources are allocated for the SL-PRS transmission, receive the SL-PRS transmission based at least partly on the DCI; and
in response to the first field indicating that the SL resources are not allocated for the SL-PRS transmission, receive a physical SL shared channel, PSSCH, transmission.

9. The apparatus (300) of claim 8, wherein the DCI comprises a second field and a third field, and, in response to the first field indicating that the SL resources are allocated for the SL-PRS transmission, the second field and the third field are set to predefined values.

10. The apparatus (300) of claim 8, wherein the DCI activates a higher layer SL-PRS configuration.

11. The apparatus (300) of claim 10, wherein the higher layer SL-PRS configuration is received by radio resource control, RRC, signaling.

12. The apparatus (300) of claim 8, wherein the processor is configured to cause the apparatus to receive a request for the DCI that allocates the SL resources.

13. The apparatus (300) of claim 12, wherein the request comprises a medium access control, MAC, control element, CE.

14. A method (800) performed by a network function, the method (800) comprising:
transmitting (802) downlink control information, DCI, that allocates sidelink, SL, resources, wherein the DCI comprises a first field indicating whether the SL resources are allocated for a SL positioning reference signal, PRS, SL-PRS, transmission;
in response to the first field indicating that the SL resources are allocated for the SL-PRS transmission, receiving (804) the SL-PRS transmission based at least partly on the DCI; and
in response to the first field indicating that the SL resources are not allocated for the SL-PRS transmission, receiving (806) a physical SL shared channel, PSSCH, transmission.

## Patentansprüche

1. Endgerät, UE, (200), umfassend:
mindestens einen Speicher (204); und
mindestens einen Prozessor (202), der mit dem mindestens einen Speicher (204) gekoppelt ist und dazu konfiguriert ist, das UE (200) zu veranlassen zum:
Empfangen von Downlink-Steuerinformationen, DCI, die Sidelink-, SL, Ressourcen zuteilen, wobei die DCI ein erstes Feld umfassen, das angibt, ob die SL-Ressourcen einer Übertragung eines SL-Positionierungsreferenzsignals, PRS, SL-PRS, zugeteilt sind;
als Reaktion darauf, dass das erste Feld angibt, dass die SL-Ressourcen der SL-PRS-Übertragung zugeteilt sind, Ausführen der SL-PRS-Übertragung basierend mindestens teilweise auf den DCI; und
als Reaktion darauf, dass das erste Feld angibt, dass die SL-Ressourcen der SL-PRS-Übertragung nicht zugeteilt sind, Einleiten einer Übertragung auf einem gemeinsam genutzten physikalischen SL-Kanal, PSSCH.

2. UE (200) nach Anspruch 1, wobei die DCI ein zweites Feld und ein drittes Feld umfassen, und als Reaktion darauf, dass das erste Feld angibt, dass die SL-Ressourcen der SL-PRS-Übertragung zugeteilt sind, das zweite Feld und das dritte Feld auf vordefinierte Werte eingestellt sind.

3. UE (200) nach Anspruch 1, wobei die DCI eine höherschichtige SL-PRS-Konfiguration aktivieren.

4. UE nach Anspruch 3, wobei die höherschichtige SL-PRS-Konfiguration von einer Signalisierung einer Funkressourcensteuerung, RRC, empfangen wird.

5. UE (200) nach Anspruch 1, wobei der mindestens eine Prozessor dazu konfiguriert ist, zu veranlassen, dass das UE eine Anfrage für die DCI, welche die SL-Ressourcen zuteilen, überträgt.

6. UE (200) nach Anspruch 5, wobei die Anfrage ein Steuerelement, CE, einer Medienzugriffssteuerung, MAC, umfasst.

7. Verfahren (700), das von einem Endgerät, UE, ausgeführt wird, wobei das Verfahren (700) umfasst:
Empfangen (702) von Downlink-Steuerinformationen, DCI, die Sidelink-, SL, Ressourcen zuteilen, wobei die DCI ein erstes Feld umfassen, das angibt, ob die SL-Ressourcen einer Übertragung eines SL-Positionierungsreferenzsignals, PRS, SL-PRS, zugeteilt werden;
als Reaktion darauf, dass das erste Feld angibt, dass die SL-Ressourcen der SL-PRS-Übertragung zugeteilt werden, Ausführen (704) der SL-PRS-Übertragung basierend mindestens teilweise auf den DCI; und
als Reaktion darauf, dass das erste Feld angibt, dass die SL-Ressourcen der SL-PRS-Übertragung nicht zugeteilt sind, Einleiten (706) einer Übertragung auf einem gemeinsam genutzten physikalischen SL-Kanal, PSSCH.

8. Gerät (300) zum Ausführen einer Netzwerkfunktion, wobei das Gerät (300) umfasst:
mindestens einen Speicher (304); und
mindestens einen Prozessor (302), der mit dem mindestens einen Speicher (304) gekoppelt ist und dazu konfiguriert ist, das Gerät (300) zu veranlassen zum:
Übertragen von Downlink-Steuerinformationen, DCI, die Sidelink-, SL, Ressourcen zuteilen, wobei die DCI ein erstes Feld umfassen, das angibt, ob die SL-Ressourcen einer Übertragung eines SL-Positionierungsreferenzsignals, PRS, SL-PRS, zugeteilt sind;
als Reaktion darauf, dass das erste Feld angibt, dass die SL-Ressourcen der SL-PRS-Übertragung zugeteilt sind, Empfangen der SL-PRS-Übertragung basierend mindestens teilweise auf den DCI; und
als Reaktion darauf, dass das erste Feld angibt, dass die SL-Ressourcen der SL-PRS-Übertragung nicht zugeteilt sind, Empfangen einer Übertragung auf einem gemeinsam genutzten physikalischen SL-Kanal, PSSCH.

9. Gerät (300) nach Anspruch 8, wobei die DCI ein zweites Feld und ein drittes Feld umfassen, und als Reaktion darauf, dass das erste Feld angibt, dass die SL-Ressourcen der SL-PRS-Übertragung zugeteilt sind, das zweite Feld und das dritte Feld auf vordefinierte Werte eingestellt sind.

10. Gerät (300) nach Anspruch 8, wobei die DCI eine höherschichtige SL-PRS-Konfiguration aktivieren.

11. Gerät (300) nach Anspruch 10, wobei die höherschichtige SL-PRS-Konfiguration durch eine Signalisierung einer Funkressourcensteuerung, RRC, empfangen wird.

12. Gerät (300) nach Anspruch 8, wobei der Prozessor dazu konfiguriert ist, das Gerät dazu zu veranlassen, eine Anfrage für die DCI, welche die SL-Ressourcen zuteilen, zu empfangen.

13. Gerät (300) nach Anspruch 12, wobei die Anfrage ein Steuerelement, CE, einer Medienzugriffssteuerung, MAC, umfasst.

14. Verfahren (800), das von einer Netzwerkfunktion ausgeführt wird, wobei das Verfahren (800) umfasst:
Übertragen (802) von Downlink-Steuerinformationen, DCI, die Sidelink-, SL, Ressourcen zuteilen, wobei die DCI ein erstes Feld umfassen, das angibt, ob die SL-Ressourcen einer Übertragung eines SL-Positionierungsreferenzsignals, PRS, SL-PRS, zugeteilt werden;
als Reaktion darauf, dass das erste Feld angibt, dass die SL-Ressourcen der SL-PRS-Übertragung zugeteilt werden, Empfangen (804) der SL-PRS-Übertragung basierend mindestens teilweise auf den DCI; und
als Reaktion darauf, dass das erste Feld angibt, dass die SL-Ressourcen der SL-PRS-Übertragung nicht zugeteilt sind, Empfangen (806) einer Übertragung auf einem gemeinsam genutzten physikalischen SL-Kanal, PSSCH.

## Revendications

1. Equipement utilisateur, UE, (200), comprenant :
au moins une mémoire (204) ; et
au moins un processeur (202) couplé à ladite au moins une mémoire (204) et configuré pour amener l'UE (200) à :
recevoir des informations de commande de liaison descendante, DCI, qui allouent des ressources de liaison latérale, SL, les DCI comprenant un premier champ indiquant si les ressources de SL sont allouées à une transmission d'un signal de référence de positionnement, PRS, de SL, SL-PRS ;
en réponse au fait que le premier champ indique que les ressources de SL sont allouées à la transmission d'un SL-PRS, effectuer la transmission d'un SL-PRS basée au moins en partie sur les DCI ; et
en réponse au fait que le premier champ indique que les ressources de SL ne sont pas allouées à la transmission d'un SL-PRS, initier une transmission sur un canal partagé physique de SL, PSSCH.

2. UE (200) selon la revendication 1, dans lequel les DCI comprennent un deuxième champ et un troisième champ, et en réponse au fait que le premier champ indique que les ressources de SL sont allouées à la transmission d'un SL-PRS, le deuxième champ et le troisième champ sont réglés sur des valeurs prédéfinies.

3. UE (200) selon la revendication 1, dans lequel les DCI activent une configuration d'un SL-PRS de couche supérieure.

4. UE selon la revendication 3, dans lequel la configuration d'un SL-PRS de couche supérieure est reçue par une signalisation de contrôle des ressources radio, RRC.

5. UE (200) selon la revendication 1, dans lequel ledit au moins un processeur est configuré pour amener l'UE à transmettre une demande pour les DCI qui allouent les ressources de SL.

6. UE (200) selon la revendication 5, dans lequel la demande comprend un élément de commande, CE, d'une commande d'accès au support, MAC.

7. Procédé (700) effectué par un équipement utilisateur, UE, le procédé (700) comprenant les étapes consistant à :
recevoir (702) des informations de commande de liaison descendante, DCI, qui allouent des ressources de liaison latérale, SL, les DCI comprenant un premier champ indiquant si les ressources de SL sont allouées à une transmission d'un signal de référence de positionnement, PRS, de SL, SL-PRS ;
en réponse au fait que le premier champ indique que les ressources de SL sont allouées à la transmission d'un SL-PRS, effectuer (704) la transmission d'un SL-PRS basée au moins en partie sur les DCI ; et
en réponse au fait que le premier champ indique que les ressources de SL ne sont pas allouées à la transmission d'un SL-PRS, initier (706) une transmission sur un canal partagé physique de SL, PSSCH.

8. Appareil (300) permettant d'effectuer une fonction de réseau, l'appareil (300) comprenant :
au moins une mémoire (304) ; et
au moins un processeur (302) couplé à ladite au moins une mémoire (304) et configuré pour amener l'appareil (300) à :
transmettre des informations de commande de liaison descendante, DCI, qui allouent des ressources de liaison latérale, SL, les DCI comprenant un premier champ indiquant si les ressources de SL sont allouées à une transmission d'un signal de référence de positionnement, PRS, de SL, SL-PRS ;
en réponse au fait que le premier champ indique que les ressources de SL sont allouées à la transmission d'un SL-PRS, recevoir la transmission d'un SL-PRS basée au moins en partie sur les DCI ; et
en réponse au fait que le premier champ indique que les ressources de SL ne sont pas allouées à la transmission d'un SL-PRS, recevoir une transmission sur un canal partagé physique de SL, PSSCH.

9. Appareil (300) selon la revendication 8, dans lequel les DCI comprennent un deuxième champ et un troisième champ, et en réponse au fait que le premier champ indique que les ressources de SL sont allouées à la transmission d'un SL-PRS, le deuxième champ et le troisième champ sont réglés sur des valeurs prédéfinies.

10. Appareil (300) selon la revendication 8, dans lequel les DCI activent une configuration d'un SL-PRS de couche supérieure.

11. Appareil (300) selon la revendication 10, dans lequel la configuration d'un SL-PRS de couche supérieure est reçue par une signalisation de contrôle des ressources radio, RRC.

12. Appareil (300) selon la revendication 8, dans lequel le processeur est configuré pour amener l'appareil à recevoir une demande pour les DCI qui allouent les ressources de SL.

13. Appareil (300) selon la revendication 12, dans lequel la demande comprend un élément de commande, CE, d'une commande d'accès au support, MAC.

14. Procédé (800) effectué par une fonction de réseau, le procédé (800) comprenant les étapes consistant à :
transmettre (802) des informations de commande de liaison descendante, DCI, qui allouent des ressources de liaison latérale, SL, les DCI comprenant un premier champ indiquant si les ressources de SL sont allouées à une transmission d'un signal de référence de positionnement, PRS, de SL, SL-PRS ;
en réponse au fait que le premier champ indique que les ressources de SL sont allouées à la transmission d'un SL-PRS, recevoir (804) la transmission d'un SL-PRS basée au moins en partie sur les DCI ; et
en réponse au fait que le premier champ indique que les ressources de SL ne sont pas allouées à la transmission d'un SL-PRS, recevoir (806) une transmission sur un canal partagé physique de SL, PSSCH.
